# EUROPEAN PATENT APPLICATION

(11) **EP 4 756 939 A1**
(43) Date of publication of application: **10.06.2026**
(21) Application number: 24849611.9
(22) Date of filing: 31.07.2024
(51) Int. Cl.: H01M 8/04119

(54) **CARTRIDGE FOR FUEL CELL HUMIDIFIER, AND FUEL CELL HUMIDIFIER**

(30) Priority: 03.08.2023 KR 20230101809
(71) Applicant: Kolon Industries, Inc., Seoul 07793 (KR)
(72) Inventor: YANG, Hyoung Mo, Seoul 07793 (KR); AHN, Woong Jeon, Seoul 07793 (KR); KIM, Do Woo, Seoul 07793 (KR)
(74) Representative: Vossius & Partner Patentanwälte Rechtsanwälte mbB
(86) International application number: PCT/KR2024/011243
(87) International publication number: WO 2025/029044

(57) **Abstract**

The present invention relates to a cartridge for a fuel cell humidifier and a fuel cell humidifier. The cartridge is for using wet gas to humidify dry gas to be supplied to a fuel cell stack, and comprises: an inner case having openings at both ends; a plurality of hollow fiber membranes accommodated within the inner case; a first fixing layer for fixing one side of the hollow fiber membranes; a second fixing layer for fixing the other side of the hollow fiber membranes; and a plurality of first coating parts attached to one side of each of the hollow fiber membranes and coupled to the first fixing layer so as to protrude from the first fixing layer toward the second fixing layer, wherein each of the first coating parts is formed to have a lower hardness than the first fixing layer.

## Description

### [Technical Field]

The present invention relates to a fuel cell humidifier for supplying wet gas to a fuel cell.

### [Background Art]

Fuel cells, unlike general chemical batteries such as dry cells or storage batteries, have an advantage of being able to continuously generate electricity as long as hydrogen and oxygen are supplied and having an efficiency that is about twice as high as that of internal combustion engines due to no heat loss.

In addition, since the fuel cells directly convert chemical energy generated by combination of the hydrogen and the oxygen into electrical energy, the fuel cells emit fewer pollutants. Therefore, the fuel cells have an advantage of not only being environmentally friendly but also of alleviating concerns about resource depletion due to an increase in energy consumption.

Such a fuel cell may be mainly classified into a polymer electrolyte membrane fuel cell (PEMFC), a phosphoric acid fuel cell (PAFC), a molten carbonate fuel cell (MCFC), a solid oxide fuel cell (SOFC), an alkaline fuel cell (AFC), or the like according to the type of used electrolyte.

These fuel cells fundamentally operate on the same principle but differ in the type of used fuel, operating temperature, catalyst, electrolyte, etc. Among them, since the PEMFC operates at a lower temperature compared to other fuel cells and has a high output power density allowing miniaturization thereof, the PEMFC is known as the most promising cell in not only a small-scale stationary power generation apparatus but also in a transportation system.

The most important factor in improving the performance of the PEMFC is to maintain a moisture content by supplying a predetermined amount of moisture or more to a polymer electrolyte membrane (or proton exchange membrane (PEM)) of a membrane electrode assembly (MEA). This is because power generation efficiency rapidly decreases when the PEM is dried.

The methods for humidifying the PEM include 1) a bubbler humidification method of filling an internal pressure container with water and allowing target gas to pass through the water using a diffuser to supply moisture, 2) a direct injection method in which the amount of moisture required for a fuel cell reaction is calculated and is directly supplied to a gas flow pipe through a solenoid valve, 3) a humidification method of supplying moisture to a gas flow layer using a polymeric separation membrane, and the like.

Among them, the membrane humidification method of humidifying the PEM by providing water vapor to air supplied to the PEM using a membrane which selectively permeates only the water vapor contained in off-gas is advantageous because it allows a humidifier to be lightweight and compact.

It is preferable that the selective permeation membrane used in the membrane humidification method be a hollow fiber membrane with a large permeation area per unit volume when a module is formed. That is, when a humidifier is manufactured using a hollow fiber membrane, there are advantages that humidification of a fuel cell is sufficient even with a small-capacity because the hollow fiber membrane with a large contact area can be highly integrated, low-cost materials can be used, and moisture and heat contained in high temperature off-gas discharged from the fuel cell can be collected and reused through the humidifier.

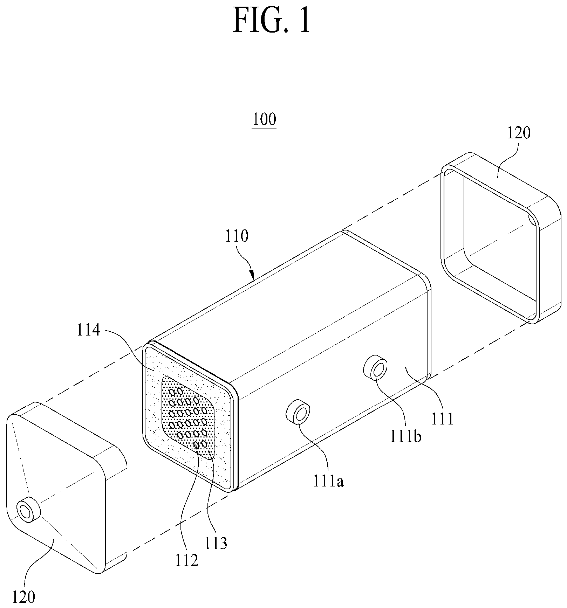

FIG. 1 is a schematic exploded perspective view of a conventional fuel cell humidifier.

As illustrated in FIG. 1, a conventional humidifier 100 includes a humidification module 110 in which moisture exchange occurs between air supplied from the outside and off-gas discharged from a fuel cell stack (not shown) and caps 120 coupled to both ends of the humidification module 110.

One of the caps 120 transmits the air supplied from the outside to the humidification module 110, and the other thereof transmits air humidified by the humidification module 110 to the fuel cell stack.

The humidification module 110 includes a mid-case 111 including an off-gas inlet 111a and an off-gas outlet 111b and a plurality of hollow fiber membranes 112 in the mid-case 111. Both ends of the hollow fiber membranes 112 are potted in a hard potting layer 113. The hard potting layer 113 is generally formed by curing a liquid polymer such as liquid polyurethane resin through a casting process. The hard potting layer 113 in which the ends of the hollow fiber membranes 112 are potted and a resin layer 114 between the hard potting layer 113 and the mid-case 111 blocks inner spaces of the caps 120 from an inner space of the mid-case 111. Similarly to the hard potting layer 113, the resin layer 114 is generally formed by curing a liquid polymer such as liquid polyurethane resin through a casting process.

The air supplied from the outside flows along hollows of the hollow fiber membranes 112. Off-gas introduced into the mid-case 111 through the off-gas inlet 111a comes into contact with outer surfaces of the hollow fiber membranes 112 and flows out of the mid-case 111 through the off-gas outlet 111b. When the off-gas comes into contact with the outer surfaces of the hollow fiber membranes 112, moisture contained in the off-gas permeates the hollow fiber membranes 112 to humidify the air flowing along the hollows of the hollow fiber membranes 112.

In this case, the ends of the hollow fiber membranes 112 are generally directly potted into the hard potting layer 113, and the off-gas introduced into the mid-case 111 flows toward boundaries between the hollow fiber membranes 112 and the hard potting layer 113. Accordingly, conventionally, since a pressure of the off-gas introduced into the mid-case 111 is directly applied to the boundaries between the hollow fiber membranes 112 and the hard potting layer 113, there is a problem that portions of the hollow fiber membranes 112 located at the boundaries between the hollow fiber membranes 112 and the hard potting layer 113 are damaged or broken.

### [Detailed Description of Invention]

### [Technical Problem]

The present invention is to solve the above-described problems and to provide a cartridge for a fuel cell humidifier and a fuel cell humidifier capable of reducing damage or breakage occurring in hollow fiber membranes.

### [Technical Solution]

The present invention may include the following configurations to achieve the above-described objects.

A cartridge for a fuel cell humidifier according to the present invention, which is provided in a fuel cell humidifier configured to humidify dry gas provided to be supplied to a fuel cell stack using wet gas, includes an inner case of which both ends have openings, a plurality of hollow fiber membranes accommodated in the inner case, a first fixing layer which fixes one sides of the hollow fiber membranes, a second fixing layer which fixes the other sides of the hollow fiber membranes, and a plurality of first coating parts bonded to the one sides of the hollow fiber membranes and bonded to the first fixing layer to protrude from the first fixing layer toward the second fixing layer. Each of the first coating parts may be formed to have a lower hardness than the first fixing layer.

A fuel cell humidifier according to the present invention includes a humidification module which humidifies dry gas provided to be supplied to a fuel cell stack using wet gas, a first cap coupled to one end of the humidification module, and a second cap coupled to the other end of the humidification module. The humidification module may include a mid-case whose both ends are open and at least one cartridge accommodated in the mid-case. The cartridge may include an inner case of which both ends have openings, a plurality of hollow fiber membranes accommodated in the inner case, a first fixing layer which fixes one sides of the hollow fiber membranes, a second fixing layer which fixes the other sides of the hollow fiber membranes, and a plurality of first coating parts bonded to the one sides of the hollow fiber membranes and bonded to the first fixing layer to protrude from the first fixing layer toward the second fixing layer. Each of the first coating parts may be formed to have a lower hardness than the first fixing layer.

A fuel cell humidifier according to the present invention includes a humidification module which humidifies dry gas provided to be supplied to a fuel cell stack using wet gas, a first cap coupled to one end of the humidification module, and a second cap coupled to the other end of the humidification module. The humidification module may include a mid-case whose both ends are open, a plurality of hollow fiber membranes accommodated in the mid-case, a first fixing layer which fixed one sides of the hollow fiber membranes, a second fixing layer which fixes the other sides of the hollow fiber membranes, and a plurality of first coating parts bonded to the one sides of the hollow fiber membranes and bonded to the first fixing layer to protrude from the first fixing layer toward the second fixing layer. Each of the first coating parts may be formed to have a lower hardness than the first fixing layer.

### [Effects of Invention]

The present invention is implemented to reduce a risk of line disconnection, damage, breakage, etc., occurring in hollow fiber membranes. According to the present invention, humidification performance using the hollow fiber membranes can be maintained, and maintenance costs for the hollow fiber membranes and the like can be reduced so as to contribute to reducing the operating costs of a fuel cell system. In addition, according to the present invention, a maintenance period for the hollow fiber membranes and the like can be increased so as to contribute to increasing the operating rate of the fuel cell system.

The present invention is implemented to reduce soft material consumption. According to the present invention, manufacturing costs can be reduced, thereby further improving product competitiveness.

### [Description of Drawings]

FIG. 1 is a schematic exploded perspective view of a conventional fuel cell humidifier.
FIG. 2 is a schematic exploded perspective view of a fuel cell humidifier according to the present invention.
FIG. 3 is a schematic exploded cross-sectional view of the fuel cell humidifier according to the present invention along line I-I of FIG. 2.
FIG. 4 is a schematic coupling cross-sectional view of the fuel cell humidifier according to the present invention along line I-I of FIG. 2.
FIGS. 5 and 6 are schematic plan views of a cartridge in the fuel cell humidifier according to the present invention.
FIGS. 7 to 9 are conceptual views illustrating a first coating part, a first fixing layer, a second coating part, and a second fixing layer coupled to both sides of each of hollow fiber membranes in the fuel cell humidifier according to the present invention.
FIG. 10 is a conceptual view illustrating an inner portion of a mid-case in a fuel cell humidifier according to a modified embodiment of the present invention.

### [Modes of the Invention]

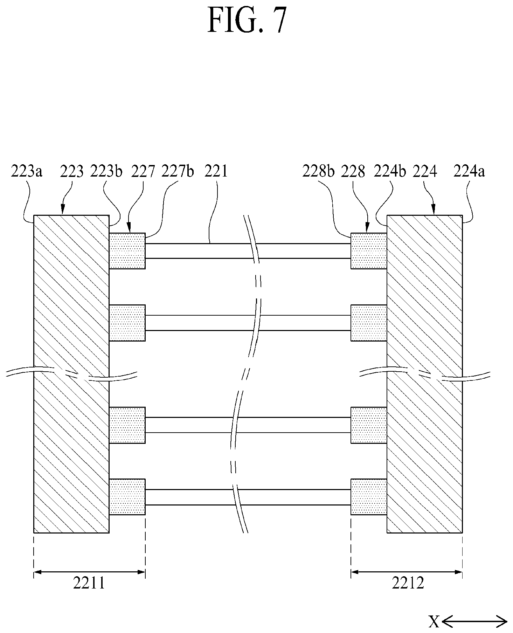

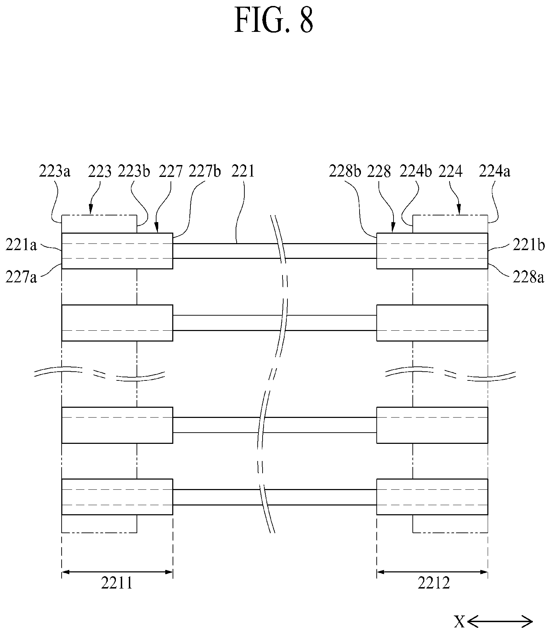

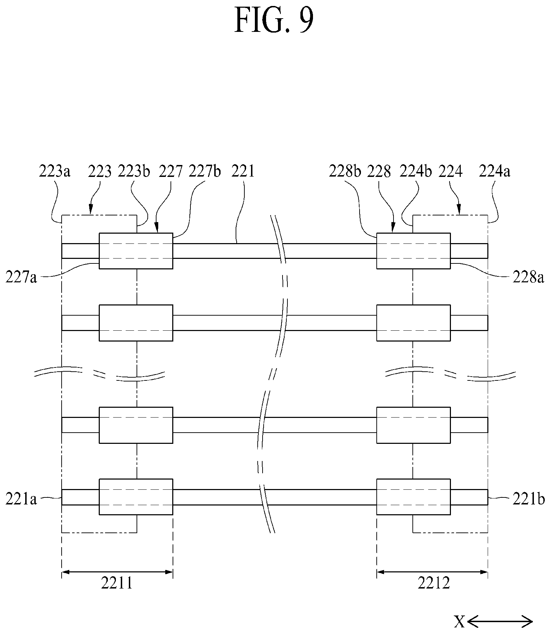

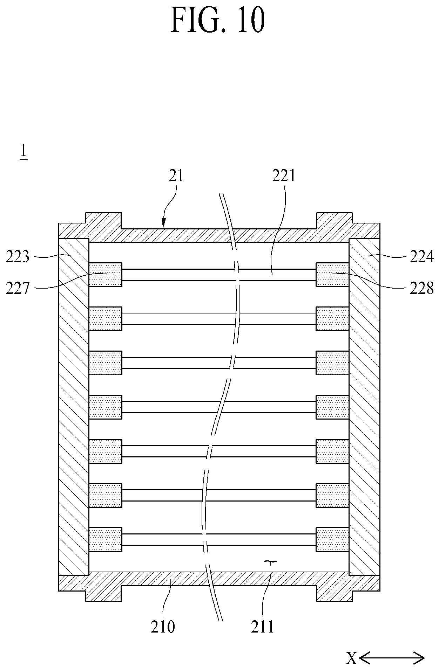

Hereinafter, embodiments of a fuel cell humidifier according to the present invention will be described in detail with reference to the accompanying drawings. Since a cartridge of the fuel cell humidifier according to the present invention may be included in the fuel cell humidifier according to the present invention, the cartridge will be described while describing the fuel cell humidifier according to the present invention. In FIGS. 7 to 10, two parallel alternate long and short dashed lines are omission lines. In FIG. 7, a first coating part, a first fixing layer, a second coating part, and a second fixing layer are hatched to distinguish the components. The alternate long and two short dashed lines of FIGS. 8 and 9 show the first fixing layer and the second fixing layer.

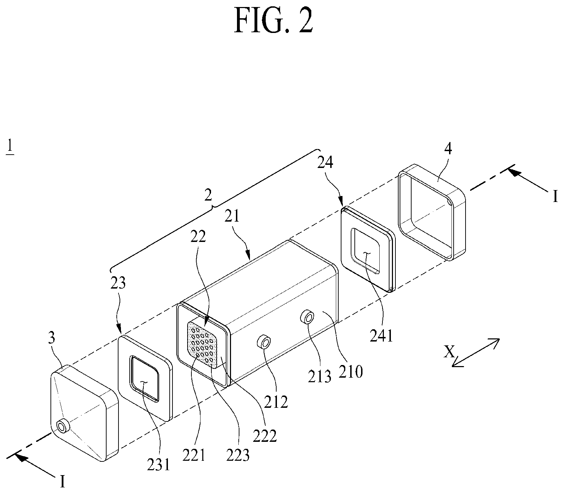

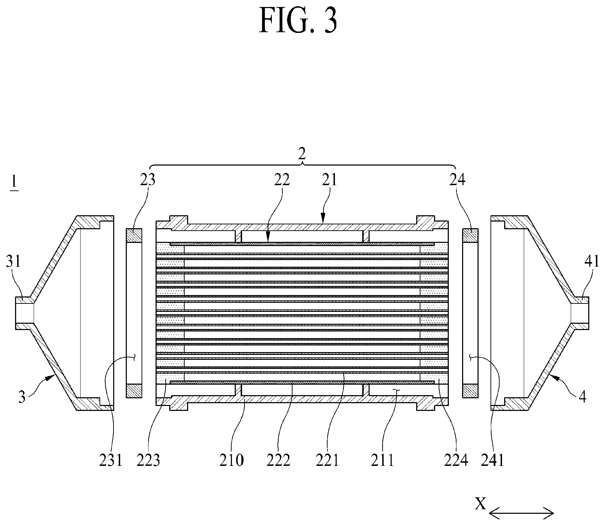

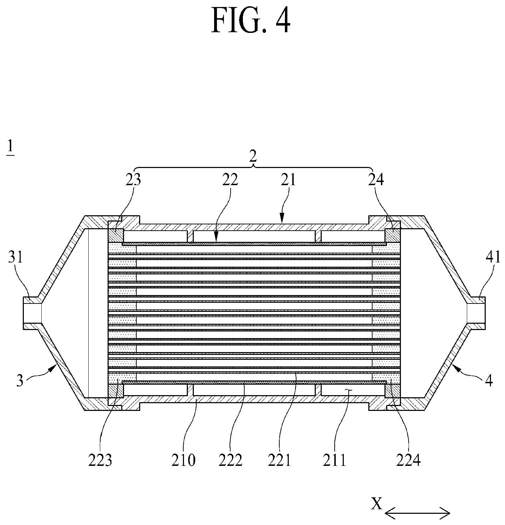

Referring to FIGS. 2 to 4, a fuel cell humidifier 1 according to the present invention humidifies dry gas provided to be supplied to a fuel cell stack (not shown) using wet gas. The wet gas may be discharged from the fuel cell stack. The dry gas may be fuel gas or air. The dry gas may be humidified by the wet gas and supplied to the fuel cell stack. The fuel cell humidifier 1 according to the present invention includes a humidification module 2 for humidifying the dry gas, a first cap 3 coupled to one end of the humidification module 2, and a second cap 4 coupled to the other end of the humidification module 2.

Referring to FIGS. 2 to 4, the humidification module 2 humidifies the dry gas. The first cap 3 may be coupled to one end of the humidification module 2. The second cap 4 may be coupled to the other end of the humidification module 2. The humidification module 2 may supply the dry gas, which is humidified, to the fuel cell stack using a first gas and a second gas. When the first gas is a dry gas, the second gas may be a wet gas. In this case, the first gas may be humidified by the second gas and supplied to the fuel cell stack. When the first gas is a wet gas, the second gas may be a dry gas. In this case, the second gas may be humidified by the first gas and supplied to the fuel cell stack.

The humidification module 2 includes a mid-case 21 and at least one cartridge 22.

The mid-case 21 is coupled to the cartridge 22. The cartridge 22 may be accommodated in the mid-case 21. Both ends of the mid-case 21 are open. In this case, an accommodation hole 211 may be formed in the mid-case 21. The accommodation hole 211 may be formed to pass through the mid-case 21 in a first axis direction (X-axis direction). At least one cartridge 22 may be disposed in the accommodation hole 211.

The mid-case 21 may include a mid-main body 210. The mid-main body 210 accommodates the cartridge 22. The cartridge 22 is disposed in the mid-main body 210 to be accommodated in the mid-main body 210. At least one cartridge 22 may be accommodated in the mid-main body 210. The accommodation hole 211 may be formed to pass through the mid-main body 210 in the first axis direction (X-axis direction).

The mid-case 21 may include a mid-inlet 212 and a mid-outlet 213. The mid-inlet 212 may allow the first gas to be introduced into the mid-main body 210. The mid-outlet 213 may allow the first gas to be discharged from an inner portion of the mid-main body 210. The mid-outlet 213 and the mid-inlet 212 may protrude from the mid-main body 210. The mid-outlet 213 and the mid-inlet 212 may be disposed to be spaced apart from each other in the first axis direction (X-axis direction). The mid-outlet 213, the mid-inlet 212, and the mid-main body 210 may be integrally formed.

The cartridge 22 is disposed in the mid-case 21. The cartridge 22 may be accommodated in the mid-main body 210. The cartridge 22 includes a plurality of hollow fiber membranes 221. The hollow fiber membranes 221 and the cartridge 22 may be coupled and modularized. Accordingly, the hollow fiber membranes 221 may be installed in the mid-case 21 through a process of coupling the cartridge 22 to the mid-case 21. Accordingly, in the fuel cell humidifier 1 according to the present invention, the ease of installation, separation, and replacement operations for the hollow fiber membranes 221 may be improved. Each of the hollow fiber membranes 221 may include a hollow to allow the second gas to pass therethrough.

The cartridge 22 may include an inner case 222.

The inner case 222 includes openings in both ends thereof, and the hollow fiber membranes 221 are accommodated in the inner case 222. The hollow fiber membranes 221 may be modularized by being disposed in the inner case 222. Each of the hollow fiber membranes 221 may include a polymer membrane formed of polysulfone resin, polyethersulfone resin, sulfonated polysulfone resin, polyvinylidene fluoride (PVDF) resin, polyacrylonitrile (PAN) resin, polyimide resin, polyamideimide resin, polyesterimide resin, or a mixture of two or more thereof.

The cartridge 22 may include a first fixing layer 223. The first fixing layer 223 fixes one sides of the hollow fiber membranes 221. The first fixing layer 223 may close the opening formed in one end of the inner case 222. In this case, the first fixing layer 223 may be formed so as not to block the hollows of the hollow fiber membranes 221. The first fixing layer 223 may be formed by curing a liquid polymer such as liquid polyurethane resin through a casting process. A portion of the first fixing layer 223 may be located in the inner case 222, and the remaining portion thereof may protrude outward from the inner case 222. The first fixing layer 223 may fix one sides of the hollow fiber membranes 221 and the inner case 222.

The cartridge 22 may include a second fixing layer 224. The second fixing layer 224 fixes the other sides of the hollow fiber membranes 221. The second fixing layer 224 may close the opening formed in the other end of the inner case 222. In this case, the second fixing layer 224 may be formed so as not to block the hollows of the hollow fiber membranes 221. The second fixing layer 224 may be formed by curing a liquid polymer such as liquid polyurethane resin through a casting process. A portion of the second fixing layer 224 may be located in the inner case 222, and the remaining portion thereof may protrude outward from the inner case 222. The second fixing layer 224 may fix the other sides of the hollow fiber membranes 221 and the inner case 222. Since the second fixing layer 224 and the first fixing layer 223 are formed so as not to block the hollows of the hollow fiber membranes 221, the second gas may be supplied to the hollows of the hollow fiber membranes 221 without being hindered by the second fixing layer 224 and the first fixing layer 223 and discharged from the hollows of the hollow fiber membranes 221 without being hindered by the second fixing layer 224 and the first fixing layer 223.

Referring to FIGS. 2 to 6, the cartridge 22 may include an inner inlet 225 and an inner outlet 226.

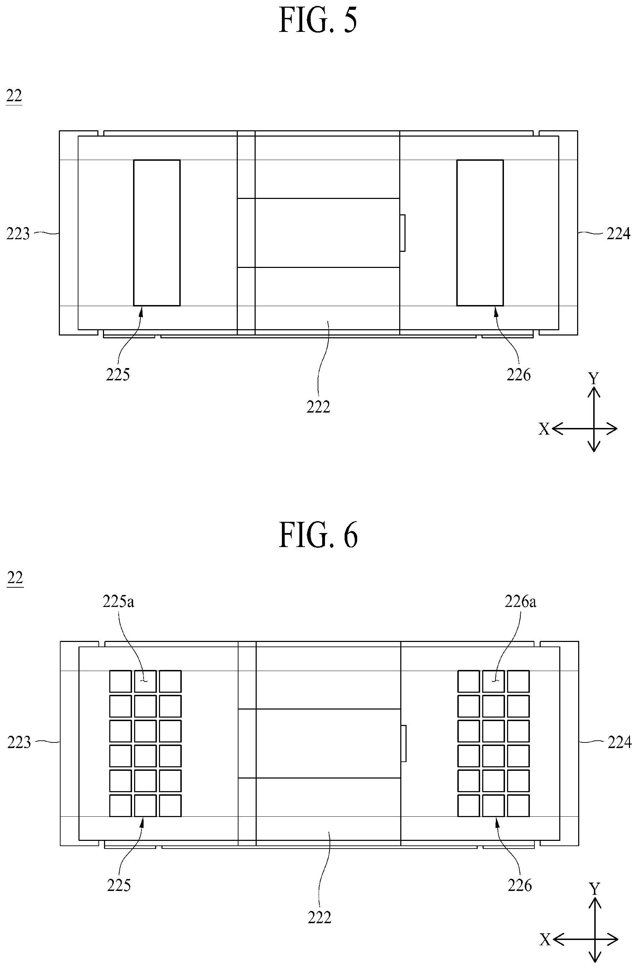

The inner inlet 225 is formed in the inner case 222. The inner inlet 225 may be formed in at least one side surface of side surfaces of the inner case 222. The side surfaces of the inner case 222 may be surfaces disposed to surround an inner hole which is formed to pass through the inner case 222 to form openings in both ends of the inner case 222. The inner hole may be formed to extend in the first axis direction (X-axis direction) and pass through the inner case 222. The inner inlet 225 may be disposed toward at least one sidewall of sidewalls of the mid-case 21. The inner inlet 225 may allow the first gas to be introduced into the inner case 222. The inner inlet 225 may be formed to pass through the inner case 222. As illustrated in FIG. 5, the inner inlet 225 may be implemented as one through hole passing through the inner case 222. As illustrated in FIG. 6, the inner inlet 225 may also be implemented as a plurality of through holes passing through the inner case 222. In this case, the inner inlet 225 may include a plurality of inlet windows 225a formed to pass through different portions of the inner case 222. The inlet windows 225a may be disposed to be spaced apart from each other in the first axis direction (X-axis direction) and a second axis direction (Y-axis direction) to form a matrix form. The second axis direction (Y-axis direction) and the first axis direction (X-axis direction) are axis directions that are perpendicular to each other.

The inner outlet 226 is formed in the inner case 222. The inner outlet 226 may be formed in at least one side surface of the side surfaces of the inner case 222. The inner outlet 226 may allow the first gas to be discharged from an inner portion of the inner case 222. The inner outlet 226 may be formed to pass through the inner case 222. As illustrated in FIG. 5, the inner outlet 226 may be implemented as one through hole passing through the inner case 222. As illustrated in FIG. 6, the inner outlet 226 may also be implemented as a plurality of through holes passing through the inner case 222. In this case, the inner outlet 226 may include a plurality of outlet windows 226a formed to pass through different portions of the inner case 222. The outlet windows 226a may be disposed to be spaced apart from each other in the first axis direction (X-axis direction) and the second axis direction (Y-axis direction) to form a matrix form. The inner outlet 226 and the inner inlet 225 may be disposed at locations spaced apart from each other in the first axis direction (X-axis direction).

When the first gas is a wet gas, the first gas may be supplied between an inner surface of the mid-case 21 and an outer surface of the cartridge 22 through the mid-inlet 212, supplied into the cartridge 22 through the inner inlet 225, and come into contact with outer surfaces of the hollow fiber membranes 221. In this process, moisture contained in the first gas permeates the hollow fiber membranes 221 to humidify the second gas flowing along the hollows of the hollow fiber membranes 221. The humidified second gas may be discharged from the hollow fiber membranes 221 and supplied to the fuel cell stack through the first cap 3 or the second cap 4. The first gas which has humidified the second gas may be discharged between the outer surface of the cartridge 22 and the inner surface of the mid-case 21 through the inner outlet 226 and discharged to the outside of the mid-case 21 through the mid-outlet 213. In this case, the first gas may be an off-gas discharged from the fuel cell stack.

When the first gas is a dry gas, the first gas may be supplied between the inner surface of the mid-case 21 and the outer surface of the cartridge 22 through the mid-inlet 212, be supplied into the cartridge 22 through the inner inlet 225, and come into contact with the outer surfaces of the hollow fiber membranes 221. In this process, moisture of the second gas flowing along the hollows of the hollow fiber membranes 221 may permeate the hollow fiber membranes 221 to humidify the first gas introduced into the cartridge 22. The humidified first gas may be discharged between the outer surface of the cartridge 22 and the inner surface of the mid-case 21 through the inner outlet 226, discharged to the outside of the mid-case 21 through the mid-outlet 213, and supplied to the fuel cell stack. The second gas which has humidified the first gas may be discharged from the hollow fiber membranes 221 and discharged to the outside through the first cap 3 or the second cap 4. In this case, the second gas may be an off-gas discharged from the fuel cell stack.

The humidification module 2 may include a first packing part 23.

The first packing part 23 is air tightly coupled to one end of the mid-case 21 through mechanical assembly. Accordingly, the first packing part 23 may allow the first cap 3 to fluidly communicate with only the hollow fiber membranes 221. Accordingly, the first packing part 23 may prevent the first gas from being directly mixed with the second gas. The first packing part 23 may be disposed between the mid-case 21 and the cartridge 22 to seal between the mid-case 21 and the cartridge 22. In this case, the cartridge 22 may be inserted into a first insertion hole 231 formed in the first packing part 23. The first packing part 23 may be in contact with each of the inner surface of the mid-case 21, the outer surface of the cartridge 22, and the first fixing layer 223. Through such contact, the first packing part 23 may be air tightly coupled to one end of the mid-case 21. In this case, the first packing part 23 may be in contact with each of a portion of the inner surface of the mid-case 21, a portion of the outer surface of the cartridge 22, and a portion of the first fixing layer 223.

The humidification module 2 may include a second packing part 24.

The second packing part 24 is air tightly coupled to the other end of the mid-case 21 through mechanical assembly. Accordingly, the second packing part 24 may allow the second cap 4 to fluidly communicate with only the hollow fiber membranes 221. Accordingly, the second packing part 24 may prevent the first gas from being directly mixed with the second gas. The second packing part 24 may be disposed between the mid-case 21 and the cartridge 22 to seal between the mid-case 21 and the cartridge 22. In this case, the cartridge 22 may be inserted into a second insertion hole 241 formed in the second packing part 24. The second packing part 24 may be in contact with each of the inner surface of the mid-case 21, the outer surface of the cartridge 22, and the second fixing layer 224. Through such contact, the second packing part 24 may be airtightly coupled to the other end of the mid-case 21. In this case, the second packing part 24 may also be in contact with a portion of the inner surface of the mid-case 21, a portion of the outer surface of the cartridge 22, and a portion of the second fixing layer 224.

Referring to FIGS. 2 to 4, the first cap 3 is coupled to one end of the humidification module 2. A space between the first cap 3 and the cartridge 22 may be sealed from a space between the cartridge 22 and the mid-case 21 by the first packing part 23. The first cap 3 may include a first port 31. The first port 31 allows the second gas to flow. The first port 31 may communicate with the hollows of the hollow fiber membranes 221. Accordingly, in a process in which the second gas flows between the first cap 3 and the hollow fiber membranes 221, the second gas may be introduced or discharged through the first port 31.

Referring to FIGS. 2 to 4, the second cap 4 is coupled to the other end of the humidification module 2. The second cap 4 may be disposed at a location spaced apart from the first cap 3 in the first axis direction (X-axis direction). A space between the second cap 4 and the cartridge 22 may be sealed from a space between the cartridge 22 and the mid-case 21 by the second packing part 24. The second cap 4 may include a second port 41. The second port 41 allows the second gas to flow. The second port 41 may communicate with the hollows of the hollow fiber membranes 221. Accordingly, in a process in which the second gas flows between the second cap 4 and the hollow fiber membranes 221, the second gas may be introduced or discharged through the second port 41. When the second gas is introduced through the second port 41, the second gas may be discharged through the first port 31. In this case, the second gas may exchange moisture with the first gas while sequentially passing through the second cap 4, the hollows of the hollow fiber membranes 221, and the first cap 3. When the second gas is discharged through the second port 41, the second gas may be introduced through the first port 31. In this case, the second gas may exchange moisture with the first gas while passing through the first cap 3, the hollows of the hollow fiber membranes 221, and the second cap 4. Although not illustrated in the drawings, resin layers may be formed at both ends of the mid-case 21 instead of the packing parts 5 and 6. The resin layers may be formed by curing a liquid polymer such as liquid polyurethane resin through a casting process.

In this case, as a pressure and the like of the first gas introduced into the cartridge 22 are applied to boundaries between the hollow fiber membranes 221 and the first fixing layer 223, line disconnection, damage, breakage, etc., may occur in portions of the hollow fiber membranes 221 located at the boundaries between the hollow fiber membranes 221 and the first fixing layer 223. In a process in which the first fixing layer 223 is formed, when a portion of liquid resin is cured after flowing over boundaries along surfaces of the hollow fiber membranes 221, movement of the hollow fiber membranes 221 occurs at the corresponding portion, and thus line disconnection, damage, breakage, etc., may occur more frequently. In order to prevent this, in the fuel cell humidifier 1 according to the present invention, the cartridge 22 may include a plurality of first coating parts 227 (see FIG. 7).

Referring to FIGS. 7 to 9, each of the first coating parts 227 may be bonded to one side 2211 of one of the hollow fiber membranes 221. The one sides 2211 of the hollow fiber membranes 221 may be one side portions of both sides of the hollow fiber membranes 221 in the first axis direction (X-axis direction). In this case, an end of the one side 2211 of each of the hollow fiber membranes 221 may correspond to one end 221a of each of the hollow fiber membranes 221. The one side 2211 of each of the hollow fiber membranes 221 may be a portion from the one end 221a of each of the hollow fiber membranes 221 to a point at which one of the first coating parts 227 starts. The point at which the first coating part 227 starts may be a location of an end of the first coating part 227 facing the second fixing layer 224. The point at which the first coating part 227 starts and a length of the one side 2211 of the hollow fiber membrane 221 may be determined by a worker in consideration of design specifications such as a length of the hollow fiber membrane 221 in the first axis direction (X-axis direction).

Each of the first coating parts 227 may be bonded to the first fixing layer 223 to protrude toward the second fixing layer 224 from the first fixing layer 223. Each of the first coating parts 227 may be formed to have a lower hardness than the first fixing layer 223. Accordingly, the first fixing layer 223 may be implemented to be relatively hard with respect to each of the first coating parts 227, and each of the first coating parts 227 may be implemented to be relatively soft with respect to the first fixing layer 223. Accordingly, each of the first coating parts 227 is implemented to disperse an external force acting according to the movement of the hollow fiber membranes 221 using the properties of a soft material implemented with a low hardness even when the hollow fiber membranes 221 move due to the pressure or the like of the first gas introduced into the cartridge 22.

Accordingly, the fuel cell humidifier 1 according to the present invention may achieve the following effects.

First, in the fuel cell humidifier 1 according to the present invention, a risk of line disconnection, damage, breakage, etc., of the hollow fiber membranes 221 can be reduced using the first coating parts 227. Accordingly, the fuel cell humidifier 1 according to the present invention can maintain humidification performance using the hollow fiber membranes 221 and contribute to reducing the operating costs of a fuel cell system by reducing maintenance costs for the hollow fiber membranes 221 and the like. In addition, in the fuel cell humidifier 1 according to the present invention, since a maintenance period for the hollow fiber membranes 221 and the like can increase, the fuel cell humidifier 1 according to the present invention can contribute to increasing the operating rate of the fuel cell system.

Second, in the fuel cell humidifier 1 according to the present invention, the first coating parts 227 can be implemented to be individually bonded to the hollow fiber membranes 221. That is, unlike the first fixing layer 223, the first coating parts 227 are not implemented in the form of layers. Accordingly, when compared to a comparative example in which a soft layer is implemented by curing a soft material through a casting process, in the fuel cell humidifier 1 according to the present invention, soft material consumption for implementing the first coating part 227 can reduced. Accordingly, when compared to the comparative example in which the soft layer is implemented by curing the soft material through the casting process, in the fuel cell humidifier 1 according to the present invention, manufacturing costs can be reduced, thereby further improving product competitiveness.

For example, each of the first coating parts 227 may be formed to have a hardness of Shore A 30 or less. In this case, the first fixing layer 223 may be formed to have a hardness of Shore D 40 or more. Accordingly, the first fixing layer 223 may be implemented to be relatively hard with respect to each of the first coating parts 227, and each of the first coating parts 227 may be implemented to be relatively soft with respect to the first fixing layer 223. The first fixing layer 223 may be formed using a material selected from a group consisting of hard polyurethane resin, hard epoxy resin, hard ultraviolet (UV) resin, hard silicone resin, a hard sealant, and a combination thereof. Each of the first coating parts 227 may be formed using a material selected from a group consisting of soft polyurethane resin, soft epoxy resin, soft UV resin, soft silicone resin, a soft sealant, and a combination thereof.

Each of the first coating parts 227 may be bonded to the hollow fiber membrane 221 to surround the outer surface of the hollow fiber membrane 221. Each of the first coating parts 227 may be bonded to the hollow fiber membrane 221 through a coating process. For example, each of the first coating parts 227 may be bonded to the hollow fiber membrane 221 through a coating process using an adhesive dipping method, a surface coating method, a taping method, or the like. In a state in which the first coating parts 227 are bonded to the hollow fiber membranes 221, the first fixing layer 223 may be formed to fix the first coating parts 227 and the hollow fiber membranes 221 by curing a liquid resin such as liquid polyurethane resin through a casting process.

As illustrated in FIG. 8, each of the first coating parts 227 may be bonded to the hollow fiber membrane 221 to surround the entirety of the one side 2211 of the hollow fiber membrane 221. In this case, each of the hollow fiber membranes 221 may protrude only toward the second fixing layer 224 from the first coating part 227. Accordingly, the one sides 2211 of the hollow fiber membranes 221 may be disposed in the first coating parts 227, and the first coating parts 227 may be disposed in the first fixing layer 223. That is, the hollow fiber membranes 221 may be disposed so as not to be in direct contact with the first fixing layer 223.

The embodiment in which each of the first coating parts 227 surrounds the entirety of the one side 2211 of the hollow fiber membrane 221 will be more specifically described below.

First, one ends 227a of the first coating parts 227, one end 223a of the first fixing layer 223, and the one ends 221a of the hollow fiber membranes 221 may all be disposed to be collinear in the first axis direction (X-axis direction). Based on FIG. 8, each of the one ends 227a of the first coating parts 227, the one end 223a of the first fixing layer 223, and the one ends 221a of the hollow fiber membranes 221 may be a left end.

Next, the other ends 227b of the first coating parts 227 may be disposed to be spaced apart from the other end 223b of the first fixing layer 223 toward the second fixing layer 224 in the first axis direction (X-axis direction). Based on FIG. 8, each of the other ends 227b of the first coating parts 227 and the other end 223b of the first fixing layer 223 may be a right end.

As illustrated in FIG. 9, each of the first coating parts 227 may be bonded to the hollow fiber membrane 221 to surround a portion of the one side 2211 of the hollow fiber membrane 221. In this case, each of the hollow fiber membranes 221 may protrude from both sides of the first coating part 227. Accordingly, portions of the one sides 2211 of the hollow fiber membranes 221 may be disposed in the first coating parts 227, and the remaining portions thereof may be disposed in the first fixing layer 223. That is, portions of the hollow fiber membranes 221 may be disposed in direct contact with the first fixing layer 223. In the embodiment in which each of the first coating parts 227 surrounds a portion of the one side 2211 of the hollow fiber membrane 221, since soft material consumption for implementing the first coating part 227 can be further reduced, manufacturing costs can be reduced further when compared to the embodiment in which each of the first coating parts 227 surrounds the entirety of the one side 2211 of the hollow fiber membrane 221.

The embodiment in which each of the first coating parts 227 surrounds a portion of the one side 2211 of the hollow fiber membrane 221 will be more specifically described below.

First, the one end 223a of the first fixing layer 223 and the one ends 221a of the hollow fiber membranes 221 may be disposed to be collinear in the first axis direction (X-axis direction), and the one ends 227a of the first coating parts 227 may be disposed to be spaced apart from the one ends 221a of the hollow fiber membranes 221 toward the second fixing layer 224. Accordingly, portions of the hollow fiber membranes 221 disposed between the one end 223a of the first fixing layer 223 and the one ends 227a of the first coating parts 227 may be in direct contact with the first fixing layer 223.

Next, the other ends 227b of the first coating parts 227 may be disposed to be spaced apart from the other end 223b of the first fixing layer 223 toward the second fixing layer 224 in the first axis direction (X-axis direction).

Referring to FIGS. 7 to 9, each of the first coating parts 227 may be bonded to the hollow fiber membrane 221 to protrude outward from the outer surface of the hollow fiber membrane 221. Accordingly, the one sides 2211 of the hollow fiber membranes 221 may be fixed by the first fixing layer 223 at locations spaced apart from each other by the first coating parts 227. Accordingly, in the fuel cell humidifier 1 according to the present invention, since the one sides 2211 of the hollow fiber membranes 221 may be spaced apart from each other using the first coating parts 227, flow paths that allow the first gas to flow may be formed in the one sides 2211 of the hollow fiber membranes 221. Accordingly, in the fuel cell humidifier 1 according to the present invention, since the fluidity and diffusivity of the first gas may be improved at one sides of the hollow fiber membranes 221, humidification efficiency can be improved by increasing contact between the hollow fiber membranes 221 and the first gas. In this case, the one sides 2211 of the hollow fiber membranes 221 may be disposed to be spaced a constant distance from each other by the first coating parts 227. Accordingly, in the fuel cell humidifier 1 according to the present invention, since the first gas may be uniformly delivered to the hollow fiber membranes 221 from the one sides 2211 of the hollow fiber membranes 221, humidification efficiency can be further improved.

The first coating parts 227 may be fixed by the first fixing layer 223 at locations spaced apart from each other. Accordingly, distances by which the one sides 2211 of the hollow fiber membranes 221 are spaced from each other may increase as much as distances by which the first coating parts 227 are spaced apart from each other. Accordingly, in the fuel cell humidifier 1 according to the present invention, since the fluidity and diffusivity of the first gas may further increase at the one sides 2211 of the hollow fiber membranes 221, humidification performance can be further improved by further increasing contact between the hollow fiber membranes 221 and the first gas.

Referring to FIGS. 2 to 9, in the fuel cell humidifier 1 according to the present invention, the cartridge 22 may include a plurality of second coating parts 228.

Each of the second coating parts 228 may be bonded to the other side 2212 of one of the hollow fiber membranes 221. The other sides 2212 of the hollow fiber membranes 221 may be any one side portions of both sides of the hollow fiber membranes 221 in the first axis direction (X-axis direction). The other sides 2212 of the hollow fiber membranes 221 and the one sides 2211 of the hollow fiber membranes 221 may be disposed at opposite sides. An end of the other side 2212 of each of the hollow fiber membranes 221 may correspond to the other end 221b of each of the hollow fiber membranes 221. The other side 2212 of each of the hollow fiber membranes 221 may be a portion from the other end 221b of each of the hollow fiber membranes 221 to a point at which the second coating part 228 starts. The point at which the second coating part 228 starts may be a location of an end of the second coating part 228 facing the first fixing layer 223. The point at which the second coating part 228 starts and a length of the other side 2212 of the hollow fiber membrane 221 may be determined by the worker by considering design specifications such as a length of the hollow fiber membrane 221 in the first axis direction (X-axis direction).

Each of the second coating parts 228 may be bonded to the second fixing layer 224 to protrude toward the first fixing layer 223 from the second fixing layer 224. Each of the second coating parts 228 may be formed to have a lower hardness than the second fixing layer 224. Accordingly, the second fixing layer 224 may be implemented to be relatively hard with respect to the second coating parts 228, and each of the second coating parts 228 may be implemented to be relatively soft with respect to the second fixing layer 224.

Accordingly, each of the second coating parts 228 is implemented to disperse an external force acting according to the movement of the hollow fiber membranes 221 using the properties of a soft material implemented with a low hardness even when the hollow fiber membranes 221 move due to the pressure or the like of the first gas introduced into the cartridge 22. Accordingly, in the fuel cell humidifier 1 according to the present invention, a risk of line disconnection, damage, breakage, etc., of the hollow fiber membranes 221 can be reduced using the second coating parts 228. The second coating parts 228 may be implemented to be individually bonded to the other sides 2212 of the hollow fiber membranes 221. Accordingly, when compared to a comparative example in which a soft layer is implemented by curing a soft material through a casting process, in the fuel cell humidifier 1 according to the present invention, the amount of soft material used for implementing the second coating part 228 can reduced.

For example, each of the second coating parts 228 may be formed to have a hardness of Shore A 30 or less. In this case, the second fixing layer 224 may be formed to have a hardness of Shore D 40 or more. Accordingly, the second fixing layer 224 may be implemented to be relatively hard with respect to each of the second coating parts 228, and each of the second coating parts 228 may be implemented to be relatively soft with respect to the second fixing layer 224. The second fixing layer 224 may be formed using a material selected from a group consisting of hard polyurethane resin, hard epoxy resin, hard ultraviolet (UV) resin, hard silicone resin, a hard sealant, and a combination thereof. Each of the second coating parts 228 may be formed using a material selected from a group consisting of soft polyurethane resin, soft epoxy resin, soft UV resin, soft silicone resin, a soft sealant, and a combination thereof.

Each of the second coating parts 228 may be bonded to the hollow fiber membrane 221 to surround the outer surface of the hollow fiber membrane 221. Each of the second coating parts 228 may be bonded to the hollow fiber membrane 221 through a coating process. For example, each of the second coating parts 228 may be bonded to the hollow fiber membrane 221 through a coating process using an adhesive dipping method, a surface coating method, a taping method, or the like. In a state in which the second coating parts 228 are bonded to the hollow fiber membranes 221, the second fixing layer 224 may be formed to fix the second coating parts 228 and the hollow fiber membranes 221 by curing a liquid resin such as liquid polyurethane resin through a casting process.

As illustrated in FIG. 8, each of the second coating parts 228 may be bonded to the hollow fiber membrane 221 to surround the entirety of the other side 2212 of the hollow fiber membrane 221. In this case, each of the hollow fiber membranes 221 may protrude only toward the first fixing layer 223 from the second coating part 228. Accordingly, the other sides 2212 of the hollow fiber membranes 221 may be disposed in the second coating parts 228, and the second coating parts 228 may be disposed in the second fixing layer 224. That is, the hollow fiber membranes 221 may be disposed so as not to be in direct contact with the second fixing layer 224.

The embodiment in which each of the second coating parts 228 surrounds the entirety of the other side 2212 of the hollow fiber membrane 221 will be more specifically described below.

First, one ends 228a of the second coating parts 228, one end 224a of the second fixing layer 224, and the other ends 221b of the hollow fiber membranes 221 may be disposed to be collinear in the first axis direction (X-axis direction). Based on FIG. 8, each of the one ends 228a of the second coating parts 228, the one end 224a of the second fixing layer 224, and the other ends 221b of the hollow fiber membranes 221 may be a right end.

Next, the other ends 228b of the second coating parts 228 may be disposed to be spaced apart from the other end 224b of the second fixing layer 224 toward the first fixing layer 223 in the first axis direction (X-axis direction). Based on FIG. 8, each of the other ends 228b of the second coating parts 228 and the other end 224b of the second fixing layer 224 may be a left end.

As illustrated in FIG. 9, each of the second coating parts 228 may be bonded to the hollow fiber membrane 221 to surround a portion of the other side 2212 of the hollow fiber membrane 221. In this case, each of the hollow fiber membranes 221 may protrude from both sides of the second coating part 228. Accordingly, portions of the other sides 2212 of the hollow fiber membranes 221 may be disposed in the second coating parts 228, and the remaining portions thereof may be disposed in the second fixing layer 224. That is, portions of the hollow fiber membranes 221 may be disposed in direct contact with the second fixing layer 224. In the embodiment in which each of the second coating parts 228 surrounds a portion of the other side 2212 of the hollow fiber membrane 221, since the amount of soft material used for implementing the second coating part 228 may be further reduced, manufacturing costs can be reduced further when compared to the embodiment in which each of the second coating parts 228 surrounds the entirety of the other side 2212 of the hollow fiber membrane 221.

The embodiment in which each of the second coating parts 228 surrounds a portion of the other side 2212 of the hollow fiber membrane 221 will be more specifically described below.

First, the one end 224a of the second fixing layer 224 and the other ends 221b of the hollow fiber membranes 221 may be disposed to be collinear in the first axis direction (X-axis direction), and the one ends 228a of the second coating parts 228 may be disposed to be spaced apart from the other ends 221b of the hollow fiber membranes 221 toward the first fixing layer 223. Accordingly, portions of the hollow fiber membranes 221 disposed between the one end 224a of the second fixing layer 224 and the one ends 228a of the second coating parts 228 may be in direct contact with the second fixing layer 224.

Next, the other ends 228b of the second coating parts 228 may be disposed to be spaced apart from the other end 224b of the second fixing layer 224 toward the first fixing layer 223 in the first axis direction (X-axis direction).

Referring to FIGS. 7 to 9, each of the second coating parts 228 may be bonded to the hollow fiber membrane 221 to protrude outward from the outer surface of the hollow fiber membrane 221. Accordingly, the other sides 2212 of the hollow fiber membranes 221 may be fixed by the second fixing layer 224 at locations spaced apart from each other by the second coating parts 228. Accordingly, in the fuel cell humidifier 1 according to the present invention, since the other sides 2212 of the hollow fiber membranes 221 may be spaced apart from each other using the second coating parts 228, flow paths that allow the first gas to flow may be formed in the other sides 2212 of the hollow fiber membranes 221. Accordingly, in the fuel cell humidifier 1 according to the present invention, since the fluidity and diffusivity of the first gas may be improved at one sides of the hollow fiber membranes 221, humidification efficiency can be improved by increasing contact between the hollow fiber membranes 221 and the first gas. In this case, the other sides 2212 of the hollow fiber membranes 221 may be disposed to be spaced a constant distance from each other by the second coating parts 228. Accordingly, in the fuel cell humidifier 1 according to the present invention, since the first gas may be uniformly delivered to the hollow fiber membranes 221 from the other sides 2212 of the hollow fiber membranes 221, humidification efficiency can be further improved.

The second coating parts 228 may be fixed by the second fixing layer 224 at locations spaced apart from each other. Accordingly, distances by which the other sides 2212 of the hollow fiber membranes 221 are spaced from each other may increase as much as distances by which the second coating parts 228 are spaced apart from each other. Accordingly, in the fuel cell humidifier 1 according to the present invention, since the fluidity and diffusivity of the first gas may further increase at the other sides 2212 of the hollow fiber membranes 221, humidification performance can be further improved by further increasing contact between the hollow fiber membranes 221 and the first gas.

Referring to FIGS. 2 to 10, in a fuel cell humidifier 1 according to a modified embodiment of the present invention, the hollow fiber membranes 221 may be directly accommodated in the mid-case 21 without the cartridge 22.

In this case, the first fixing layer 223 may be disposed on one end of the mid-case 21 instead of the first packing part 23. The first fixing layer 223 may fix the one sides 2211 of the hollow fiber membranes 221 to one end of the mid-case 21. The first coating part 227 bonded to the one side 2211 of each of the hollow fiber membranes 221 may be bonded to the first fixing layer 223. Since the first coating part 227 is implemented to be substantially the same as that of the fuel cell humidifier 1 according to the above-described present invention, a detailed description thereof will be omitted.

The second fixing layer 224 may be disposed on the other end of the mid-case 21 instead of the second packing part 24. The second fixing layer 224 may fix the other sides 2212 of the hollow fiber membranes 221 to the other end of the mid-case 21. The second coating part 228 coupled to the other side 2212 of each of the hollow fiber membranes 221 may be coupled to the second fixing layer 224. Since the second coating part 228 is implemented to be substantially the same as that of the fuel cell humidifier 1 according to the above-described present invention, a detailed description thereof will be omitted.

The above-described present invention is not limited to the above-described embodiments and the accompanying drawings, and it will be apparent to those skilled in the art that various substitutions, modifications, and changes are possible without departing from the technical spirit of the embodiment.

**[Reference Numerals]**

| | | | |
|---|---|---|---|
| 1: | FUEL CELL HUMIDIFIER | | |
| 2: | HUMIDIFICATION MODULE | 21: | MID-CASE |
| 210: | MID-MAIN BODY | 211: | ACCOMMODATION HOLE |
| 212: | MID-INLET | 213: | MID-OUTLET |
| 22: | CARTRIDGE | 221: | HOLLOW FIBER MEMBRANE |
| 221a: | ONE END OF HOLLOW FIBERMEMBRANE | 221b: | HOLLOWFIBER MEMBRANE THE OTHER END OF |
| 2211:: | ONE SIDE OF HOLLOW FIBERMEMBRANE | 2212: | OF HOLLOWFIBER MEMBRANE THE OTHER SIDE |
| 222: | INNER CASE | 223: | FIRST FIXING LAYER |
| 223a: | ONE END OF FIRST FIXING LAYER | 223b: | FIRST FIXINGLAYER THE OTHER END OF |
| 224: | SECOND FIXING LAYER | 224a: | LAYER ONE END OF SECOND FIXING |
| 224b: | THE OTHER END OF SECONDFIXINGLAYER | 225: | INNER INLET |
| 225a: | INLET WINDOW | 226: | INNER OUTLET |
| 226a: | OUTLET WINDOW | 227: | FIRST COATING PART |
| 227a: | ONE END OF FIRST COATINGPART | 227b: | FIRST COATINGPART THE OTHER END OF |
| 228: | SECOND COATING PART | 228a: | SECONDCOATING PART ONE END OF |
| 228b: | THE OTHER END OF SECONDCOATINGPART | 23: | PACKINGPART FIRST |
| 231: | FIRST INSERTION HOLE | 24: | SECOND PACKING PART |
| 241: | SECOND INSERTION HOLE | 3: | FIRSTCAP |
| 31: | FIRST PORT | 4: | SECOND CAP |
| 41: | SECOND PORT | | |

## Claims

1. A cartridge for a fuel cell humidifier, which is provided in a fuel cell humidifier configured to humidify dry gas provided to be supplied to a fuel cell stack using wet gas, comprising:
an inner case of which both ends have openings;
a plurality of hollow fiber membranes accommodated in the inner case;
a first fixing layer which fixes one sides of the hollow fiber membranes;
a second fixing layer which fixes the other sides of the hollow fiber membranes; and
a plurality of first coating parts bonded to the one sides of the hollow fiber membranes and bonded to the first fixing layer to protrude from the first fixing layer toward the second fixing layer,
wherein each of the first coating parts is formed to have a lower hardness than the first fixing layer.

2. The cartridge of claim 1, comprising a plurality of second coating parts bonded to the other sides of the hollow fiber membranes and bonded to the second fixing layer to protrude from the second fixing layer toward the first fixing layer,
wherein each of the second coating parts is formed to have a lower hardness than the second fixing layer.

3. The cartridge of claim 1 or 2, wherein:
each of the first coating parts is bonded to the hollow fiber membrane to surround a portion of one side of the hollow fiber membrane; and
each of the hollow fiber membranes protrudes from both sides of the first coating part.

4. The cartridge of claim 1 or 2, wherein:
each of the first coating parts is bonded to each of the hollow fiber membranes to surround an entirety of one side of the hollow fiber membrane; and
each of the hollow fiber membranes protrudes from the first coating part toward only the second fixing layer.

5. The cartridge of claim 1 or 2, wherein:
each of the first coating parts is bonded to the hollow fiber membrane to protrude outward from an outer surface of the hollow fiber membrane; and
the one sides of the hollow fiber membranes are fixed by the first fixing layer at locations spaced apart from each other by the first coating parts.

6. The cartridge of claim 5, wherein the first coating parts are fixed by the first fixing layer at locations spaced apart from each other.

7. A fuel cell humidifier comprising:
a humidification module which humidifies dry gas provided to be supplied to a fuel cell stack using wet gas;
a first cap coupled to one end of the humidification module; and
a second cap coupled to the other end of the humidification module,
wherein the humidification module includes a mid-case whose both ends are open and at least one cartridge accommodated in the mid-case, and
the cartridge includes an inner case of which both ends have openings, a plurality of hollow fiber membranes accommodated in the inner case, a first fixing layer which fixes one sides of the hollow fiber membranes, a second fixing layer which fixes the other sides of the hollow fiber membranes, and a plurality of first coating parts bonded to the one sides of the hollow fiber membranes and bonded to the first fixing layer to protrude from the first fixing layer toward the second fixing layer, and
each of the first coating parts is formed to have a lower hardness than the first fixing layer.

8. A fuel cell humidifier comprising:
a humidification module which humidifies dry gas provided to be supplied to a fuel cell stack using wet gas;
a first cap coupled to one end of the humidification module; and
a second cap coupled to the other end of the humidification module,
wherein the humidification module includes a mid-case whose both ends are open,
a plurality of hollow fiber membranes accommodated in the mid-case, a first fixing layer which fixed one sides of the hollow fiber membranes, a second fixing layer which fixes the other sides of the hollow fiber membranes, and a plurality of first coating parts bonded to the one sides of the hollow fiber membranes and bonded to the first fixing layer to protrude from the first fixing layer toward the second fixing layer, and
each of the first coating parts is formed to have a lower hardness than the first fixing layer.

9. The fuel cell humidifier of claim 7 or 8, comprising a plurality of second coating parts bonded to the other sides of the hollow fiber membranes and bonded to the second fixing layer to protrude from the second fixing layer toward the first fixing layer,
wherein each of the second coating parts is formed to have a lower hardness than the second fixing layer.

10. The fuel cell humidifier of claim 7 or 8, wherein:
each of the first coating parts is bonded to the hollow fiber membrane to surround a portion of one side of the hollow fiber membrane; and
each of the hollow fiber membranes protrudes from both sides of the first coating part.

11. The fuel cell humidifier of claim 7 or 8, wherein:
each of the first coating parts is bonded to the hollow fiber membrane to surround an entirety of one side of the hollow fiber membrane; and
each of the hollow fiber membranes protrudes from the first coating part toward only the second fixing layer.

12. The fuel cell humidifier of claim 7 or 8, wherein:
each of the first coating parts is bonded to the hollow fiber membrane to protrude outward from an outer surface of the hollow fiber membrane; and
the one sides of the hollow fiber membranes are fixed by the first fixing layer at locations spaced apart from each other by the first coating parts.

13. The fuel cell humidifier of claim 12, wherein the first coating parts are fixed by the first fixing layer at locations spaced apart from each other.
